# EUROPÄISCHE PATENTSCHRIFT

(11) **EP 0 940 276 B1**
(45) Veröffentlichungstag und Bekanntmachung des Hinweises auf die Patenterteilung: **21.11.2001**
(21) Anmeldenummer: 99103756.5
(22) Anmeldetag: 26.02.1999
(51) Int. Cl.: B60J 1/20, F41H 7/02

(54) **Einrichtung zum Schutz des Innenraums eines Kampffahrzeugs, insbesondere eines Kampfpanzers, gegen Aufheizung durch Sonneneinstrahlung**
Device for protecting the interior of a combat vehicle, especially a tank, against heating by solar heat
Dispositif de protection pour l'intérieur d'un véhicule de combat, en particulier un char, contre le chauffage par chaleur solaire

(30) Priorität: 06.03.1998 DE 19809629
(43) Veröffentlichungstag der Anmeldung: 08.09.1999
(73) Patentinhaber: Krauss-Maffei Wegmann GmbH & Co. KG, 80997 München (DE)
(72) Erfinder: Sprafke, Uwe, Dipl.-Ing., 34270 Schauenburg (DE); Wettstein, Werner O., 1470 Estavayer-le-Lac (CH)
(74) Vertreter: Feder, Wolf-Dietrich, Dr. Dipl.-Phys.

(56) Entgegenhaltungen:
- EP-A- 0 635 359
- US-A- 4 261 649
- US-A- 4 921 299
- US-A- 4 950 534

## Beschreibung

Die Erfindung betrifft eine Einrichtung zum Schutz des Innenraums eines Kampffahrzeugs, insbesondere eines Kampfpanzers, gegen Aufheizung durch Sonneneinstrahlung.

Das Einsatzspektrum von modernen Kampffahrzeugen, insbesondere Kampfpanzern, hat sich beispielsweise im Rahmen von Friedensmissionen erheblich erweitert. Zu diesem Einsatzspektrum gehört auch das Übernehmen von stationären Sicherungsaufgaben in Gebieten mit wärmerem Klima, d.h. höherer Sonneneinstrahlung. Hier tritt das Problem auf, daß sich infolge einer Aufheizung durch Sonneneinstrahlung der Innenraum des Kampffahrzeugs über eine zulässige und erträgliche Grenze hinaus erwärmt. Kühlvorrichtungen in der Form von Belüftungs- oder Klimaanlagen erhöhen den technischen Aufwand bei der Ausrüstung des Kampffahrzeugs beträchtlich, benötigen zusätzlichen Platz und erhöhen die Störanfälligkeit.

In dem Dokument US-A 4 261 649 ist ein Sonnenschirm zur Anordnung an der Innenseite der Fensterscheibe, insbesondere des Rückfensters eines Kraftfahrzeugs beschrieben, der eine dünne Platte aus einem transparenten, halbstarren Material aufweist, die auf ihrer der Fensterscheibe zugewandten Seite mit einer reflektierenden, transparenten Schicht versehen ist. Die Anordnung ist so, daß sich zwischen der reflektierenden Schicht und der Innenfläche der Fensterscheibe ein Luftspalt befindet.

In US-A 4 921 299 ist ein Wärmeschild für ein Kraftfahrzeug geoffenbart, das als aufrollbares Rollo an einer Kraftfahrzeug-Fensterscheibe angeordnet ist und im ausgezogenen Zustand im Abstand hinter der Fensterscheibe liegt. Das Rollo besteht aus wärmeisolierendem Material und besitzt an seiner Außenseite eine reflektierende Schicht.

US-A 4 950 534 beschreibt eine Kraftfahrzeug-Dachauskleidung, bei der unterhalb des Fahrzeugdaches in einem gegebenen Abstand Platten aus einem geschlossenporigen Schaumstoff angeordnet sind, die an ihren äußeren Oberflächen beidseitig mit einer reflektierenden Schicht versehen sind.

In EP-A 0 635 359 ist eine Panzerglasscheibe für ein Kraftfahrzeugfenster beschrieben, die aus mehreren Schichten aus Silikatglas besteht, zwischen denen Schichten aus einem thermoplastischen Polymer sowie eine Infrarotstrahlung reflektierende Schicht angeordnet sind, wobei hinter der Infrarotstrahlung reflektierenden Schicht ein Luftspalt angeordnet sein kann.

Der Erfindung liegt die Aufgabe zugrunde, eine Einrichtung zum Schutz des Innenraums eines Kampffahrzeugs, insbesondere eines Kampfpanzers, gegen Aufheizung durch Sonneneinstrahlung zu schaffen, die einfach aufgebaut ist und die anstelle einer Kühleinrichtung oder in Kombination mit einer solchen Kühleinrichtung eingesetzt werden kann, wobei außerdem ein Splitterschutz erreicht werden sollte.
Die Lösung dieser Aufgabe geschieht erfindungsgemäß mit den Merkmalen aus dem Patentanspruch 1. Vorteilhafte Weiterbildungen der Erfindung sind in den abhängigen Ansprüchen beschrieben.

Die Erfindung beruht auf dem Grundgedanken, es durch gezielte Mäßnahmen zu verhindern, daß die in dem eingestrahlten Sonnenlicht enthaltene Infrarotstrahlung zu einer Aufheizung des Innenraums führt. Eine Reflexion der Infrarotstrahlung an der Außenseite des Kampffahrzeugs ist dabei unzweckmäßig, weil entsprechende Maßnahmen an der äußeren Oberfläche schlecht durchführbar und entsprechende Beschichtungen leicht beschädigbar sind. Außerdem hätte dies zur Folge, daß

das Kampffahrzeug durch die starke Reflexion von Infrarotstrahlung in den Außenraum noch leichter erkennbar wird.

Aus diesem Grunde erfolgt bei der erfindungsgemäßen Einrichtung die Reflexion nicht an der Außenseite der Außenwand des Fahrzeugs, sondern von außen gesehen hinter der Innenfläche der Außenwand im Innenraum des Fahrzeugs. Hier befindet sich auf der Außenseite der an der Innenseite der Außenwand angeordneten Abschirmplatten eine Infrarotstrahlen nach außen reflektierende Schicht, wobei von besonderer Bedeutung ist, daß sich zwischen dieser die Infrarotstrahlung nach außen reflektierenden Schicht und der Innenfläche der Außenwand ein Luftspalt befindet. Die Wirkungsweise dieser Einrichtung besteht darin, daß sich zwar die Außenwand des Fahrzeugs durch die Sonneneinstrahlung aufheizt und entsprechend Infrarotstrahlung in Richtung auf den Innenraum des Fahrzeugs abgibt, daß diese Infrarotstrahlung aber nicht in den Innenraum hineingelangt und dort die vorhandene Luft aufheizen kann, sondern an den Abschirmplatten in den Luftspalt hinein und auf die Außenwand zu reflektiert wird, wobei sie im Luftspalt und in der Außenwand absorbiert wird, was dort zu einer zusätzlichen Aufheizung führen kann. Gegen eine Aufheizung durch Wärmeleitung ist der Innenraum durch die aus wärmeisolierendem Material bestehenden Abschirmplatten geschützt. Es hat sich gezeigt, daß mit der erfindungsgemäßen Einrichtung bei Sonneneinstrahlung eine wesentlich geringere Aufheizung des Innenraums auftritt, als ohne diese Einrichtung.

Die erfindungsgemäße Einrichtung kann in besonders zweckmäßiger Weise so ausgebildet werden, daß sie gleichzeitig zur Absorption der im Fahrzeuginneren erzeugten Schallwellen dient und dadurch der Schallpegel im Innenraum herabgesetzt wird.

Somit wird die erfindungsgemäße Einrichtung zu einer "Multifunktionseinrichtung", durch welche mit einfachen Mitteln die ergonomischen Bedingungen im Innenraum des Kampffahrzeugs verbessert werden.

Im folgenden wird anhand der beigefügten Zeichnungen ein Ausführungsbeispiel für eine Einrichtung nach der Erfindung näher erläutert.

In den Zeichnungen zeigen:
Fig. 1 im Schnitt einen Teil der Außenwand eines Kampffahrzeuges, an deren Innenseite eine Einrichtung zum Schutz des Innenraums gegen Aufheizung durch Sonneneinstrahlung angeordnet ist;
Fig. 2 einen Teil der Außenwand des Kampffahrzeuges in Aufsicht von innen gesehen mit einer daran befestigten Einrichtung gemäß Fig. 1;
Fig. 3 einen Schnitt nach der Linie III-III in Fig. 2 durch einen Teil einer Abschirmplatte mit einer Befestigungsvorrichtung.

In der Zeichnung ist im Schnitt ein Teil der Außenwand eines Kampffahrzeugs, beispielsweise die Dachplatte 1, eines im übrigen nicht dargestellten Kampfpanzers gezeigt, auf welche von außen Sonneneinstrahlung S einfällt. An der Innenseite dieser Dachplatte 1 sind Abschirmplatten 2.1, 2.2, 2.3 aus wärmeisolierendem Material angeordnet und zwar so, daß zwischen der Oberseite der Abschirmplatten und der Unterseite der Dachplatte 1 jeweils ein Luftspalt 3.1, 3.2, 3.3 verbleibt. Die Oberseite der Abschirmplatten 2.1, 2.2, 2.3 ist mit einer Infrarotstrahlung nach außen reflektierenden Schicht 4.1, 4.2, 4.3 versehen, die beispielsweise als aufgeklebte Folie ausgebildet sein kann. Die Abschirmplatten 2.1, 2.2, 2.3 selbst können aus einem gleichzeitig Splitterschutz gewährenden Material, beispielsweise aus Glasfasermaterial, Polyethylen und dergleichen bestehen.

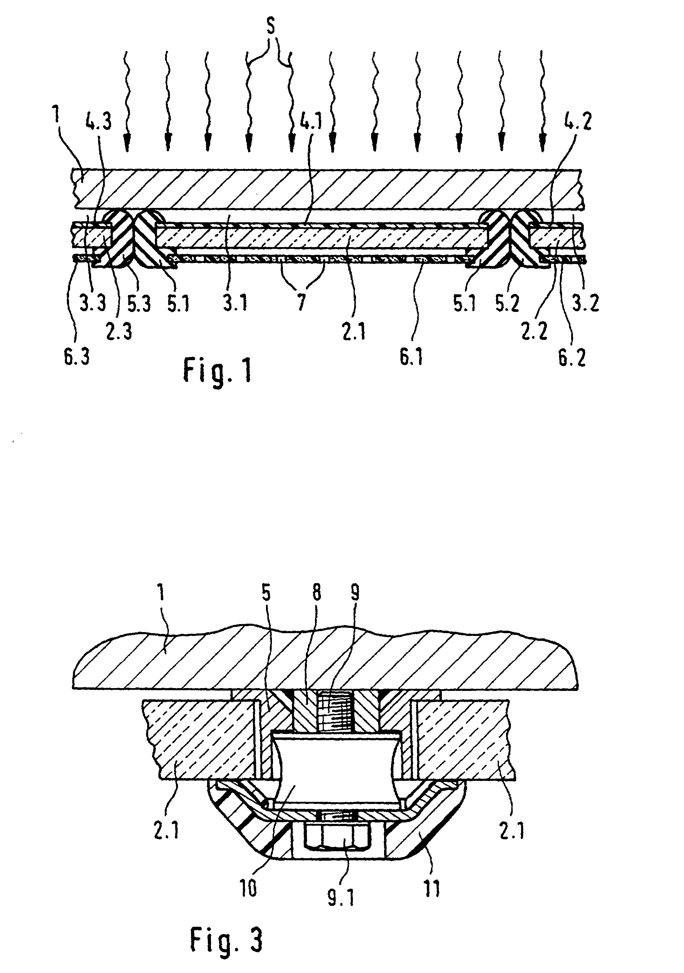

Die Breite des Luftspaltes 3.1, 3.2, 3.3 kann 10 bis 20mm, vorzugsweise 12mm betragen. Es hat sich als sehr vorteilhaft erwiesen, wenn dieser Luftspalt keine eine Wärmekonvektion erlaubende Verbindung mit dem Innenraum des Fahrzeugs hat. Um hier eine gute Dichtung der Räume des Luftspaltes 3.1, 3.2, 3.3 gegen den Fahrzeuginnenraum zu erreichen, sind die Abschirmplatten 2.1, 2.2, 2.3 mit umlaufenden, gleichzeitig als Abstandshalter dienenden Dichtungsmanschetten 5.1, 5.2, 5.3 versehen, durch welche die den Luftspalt bildenden Räume 3.1, 3.2, 3.3 rundum abgedichtet sind. Die Abschirmplatten 2.1, 2.2, 2.3 sind in der aus Fig. 1 ersichtlichen Weise in den Dichtungsmanschetten gehaltert und die Dichtungsmanschetten 5.1, 5.2 und 5.3 der nebeneinander angeordneten Abschirmplatten liegen unmittelbar aneinander an, so daß auch hier kein Zwischenraum entsteht, durch den Infrarotstrahlung von der Dachplatte 1 in den Innenraum des Fahrzeugs eindringen könnte. Die Dichtungsmanschetten können aus einem elastomeren Material wie Gummi oder Schaumstoff bestehen. Sie dienen gleichzeitig als Kantenschutz für die Abschirmplatten.

Der besondere Aufbau der beschriebenen Einrichtung eröffnet die Möglichkeit, in die Einrichtung zum Schutz des Innenraums des Kampffahrzeugs gegen Aufheizung eine weitere Einrichtung zu integrieren, die zur Absorption des im Innenraum entstehenden Schalls, beispielsweise durch die Antriebsmotoren und somit zur Senkung des Schallpegels im Innenraum dient.

Hierzu sind in den Dichtungsmanschetten 5.1, 5.2, 5.3 in der aus Fig. 1 ersichtlichen Weise zusätzliche Schallschluckmatten 6.1, 6.2, 6.3 gehaltert und zwar so, daß sie in einem vorgegebenen Abstand von der Innenfläche der Abschirmplatten 2.1, 2.2, 2.3 angeordnet sind. Die Schallschluckmatten 6.1, 6.2, 6.3 können in üblicher Weise aus einem großporigen Schaumkunststoffmaterial bestehen. Zur Verstärkung der schallschluckenden Eigenschaften können in an sich bekannter Weise in den Schallschluckmatten Öffnungen 7 vorgesehen sein, die die Schallschluckmatte ganz oder teilweise durchdringen und in ihren Abmessungen auf die am häufigsten auftretenden Schallfrequenzen abgestimmt sein können, so daß sie infolge ihrer Resonatoreigenschaften eine besonders hohe Absorption gewährleisten.

Die Funktionsweise der beschriebenen Einrichtung ist folgende:

Die von außen einfallende Sonnenstrahlung S heizt infolge ihres Infrarotanteils die Dachplatte 1 auf und diese gibt ihrerseits Infrarotstrahlung in Richtung auf den Innenraum des Fahrzeugs, also in der Zeichnung nach unten, ab. Diese in Richtung auf den Innenraum abgegebene Infrarotstrahlung wird an der Infrarotstrahlen reflektierenden Schicht 4.1, 4.2, 4.3 reflektiert und gelangt in den Luftspalt 3.1, 3.2, 3.3, wo sie zum Teil absorbiert wird. Der Rest wird beim Auftreffen auf die Unterseite der Dachplatte 1 absorbiert. Ein Eindringen der erhitzten Luft in den Luftspalten 3.1, 3.2, 3.3 in den Innenraum des Fahrzeugs ist infolge der Abdichtung mittels der Dichtungsmanschetten 5.1, 5.2, 5.3 nicht möglich. Eine Wärmeübertragung durch Wärmeleitung ist infolge des sowohl für die Abschirmplatten 2.1, 2.2, 2.3 als auch für die Dichtungsmanschetten 5.1, 5.2, 5.3 verwendeten wärmeisolierenden Materials ausgeschlossen.

Der von innen in Richtung auf die Außenwand des Fahrzeugs abgestrahlte Schall wird in den Schallschluckmatten 6.1, 6.2, 6.3 absorbiert, so daß keine den Schallpegel erhöhenden Schallreflexionen stattfinden.

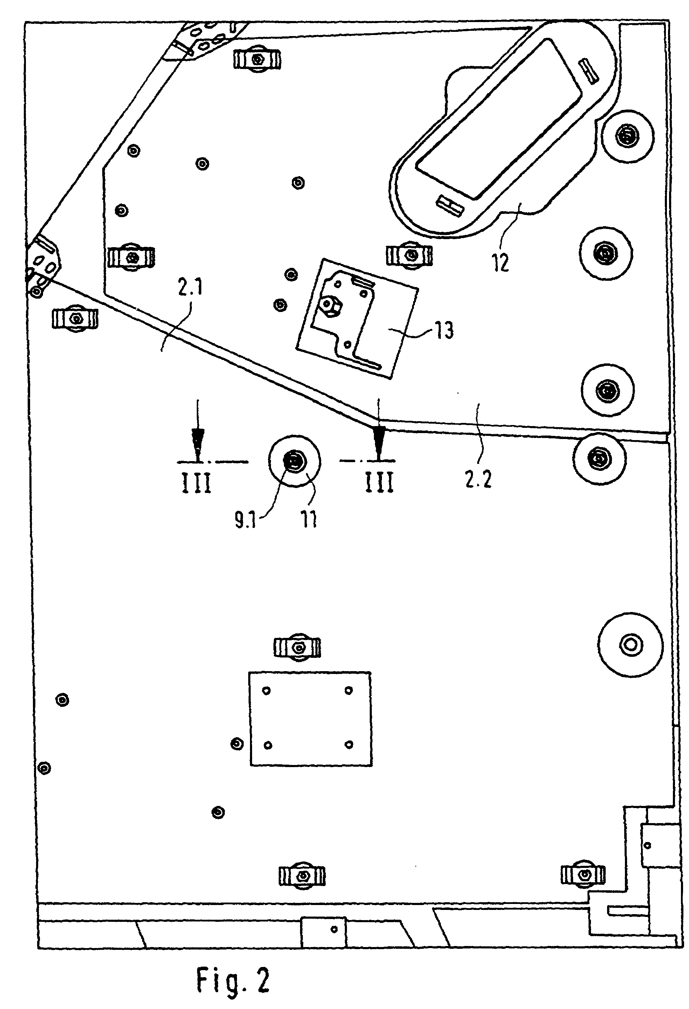

Aus Fig. 2 ist zu entnehmen, wie beispielsweise die beiden in Fig. 1 erkennbaren Abschirmplatten 2.1 und 2.2 an der Innenseite der Außenwand des Kampffahrzeuges angeordnet sein können, wobei durch die Dachplatte 1 hindurchgeführte Vorrichtungen wie Winkelspiegel und dgl. durch entsprechende Durchbrüche 12, 13 in der Abschirmplatte 2.2 hindurchgeführt sind.

Die Befestigung der Abschirmplatten an der Dachplatte 1 kann über Schraubenbolzenverbindungen geschehen, wobei dafür gesorgt werden muß, daß über diese Befestigungen möglichst wenig Wärme von der Dachplatte 1 in das Fahrzeuginnere übertragen wird.

Fig. 3 zeigt eine Befestigungsvorrichtung im Teilschnitt. Auf die Innenseite der Dachplatte 1 ist ein Gewindestück 8 aufgeschweißt, in welches ein Schraubenbolzen 9 eingeschraubt ist. Dieser Schraubenbolzen 9 durchgreift eine Öffnung in der Abschirmplatte 2.1 und trägt ein isolierendes Halterungselement 10, das in eine Halterungsmanschette 5 eingreift, die in der Öffnung der Abschirmplatte 2.1 angeordnet ist. Auf diese Weise ist eine feste Halterung gewährleistet, an der die Abschirmplatte 2.1 schwingungsgedämpft aufgehängt ist und die keine Wärmebrücke in den Innenraum hin bildet. Der Schraubenkopf 9.1 des Schraubenbolzens 9 ist zur Vermeidung von Verletzungen und Verringerung einer eventuellen Abstrahlung mit einer Abdeckkappe 11 abgedeckt.

## Patentansprüche

1. Einrichtung zum Schutz des Innenraums eines Kampffahrzeugs, insbesondere eines Kampfpanzers, gegen Aufheizung durch Sonneneinstrahlung, bei welcher an der Innenseite mindestens eines Teils der Aussenwand (1) des Fahrzeugs Abschirmplatten (2.1, 2.2, 2.3) aus wärmeisolierendem Material seitlich aneinander anschließend derart angeordnet werden können, daß zwischen der nach außen weisenden Oberfläche der Abschirmplatten (2.1, 2.2, 2.3) und der Innenfläche der Außenwand (1) ein Luftspalt (3.1, 3.2, 3.3) vorgegebener Breite verbleibt, wobei die Abschirmplatten (2.1, 2.2, 2.3) aus einem gleichzeitig Splitterschutz gewährenden Material bestehen und auf ihrer nach außen weisenden Seite mit einer Infrarotstrahlung nach außen reflektierenden Schicht (4.1, 4.2, 4.3) versehen sind.

2. Einrichtung nach Anspruch 1, **dadurch gekennzeichnet, daß** die Infrarotstrahlen reflektierende Schicht (4.1, 4.2, 4.3) als auf die Abschirmplatten (2.1, 2.2, 2.3) aufgeklebte Folie ausgebildet ist.

3. Einrichtung nach einem der Ansprüche 1 oder 2, **dadurch gekennzeichnet, daß** im eingebauten Zustand der Luftspalt (3.1, 3.2, 3.3) zwischen der nach außen weisenden Oberfläche der Abschirmplatten (2.1, 2.2, 2.3) und der Innenfläche der Außenwand (1) 10 bis 20 mm, vorzugsweise 12 mm beträgt.

4. Einrichtung nach einem der Ansprüche 1 bis 3, **dadurch gekennzeichnet, daß** als Abstandshalter für die Abschirmplatten (2.1, 2.2, 2.3) im eingebauten Zustand umlaufende Dichtungsmanschetten (5.1, 5.2, 5.3) dienen, in denen sie gehaltert sind und die den jeweiligen Raum zwischen der nach außen weisenden Oberfläche der Abschirmplatten (2.1, 2.2, 2.3) und der Innenfläche der Außenwand (1) rundum abdichten.

5. Einrichtung nach Anspruch 4, **dadurch gekennzeichnet, daß** die Dichtungsmanschetten (5.1, 5.2, 5.3) nebeneinander angeordneter Abschirmplatten (2.1, 2.2, 2.3) unmittelbar aneinander anliegen.

6. Einrichtung nach einem der Ansprüche 1 bis 5, **dadurch gekennzeichnet, daß** zur Befestigung der Abschirmplatten (2.1) jeweils Öffnungen in der Abschirmplatte (2.1) durchgreifende Schraubenbolzen (9) dienen, die in an der Außenwand (1) des Fahrzeugs befestigte Gewindestücke (8) einschraubbar sind und an denen jeweils isolierende Halterungselemente (10) angeordnet werden können, die in eine in der Öffnung der Abschirmplatte (2.1) angeordnete Halterungsmanschette (5) eingreifen.

7. Einrichtung nach einem der Ansprüche 1 bis 6, **dadurch gekennzeichnet, daß** vor der Innenseite mindestens eines Teils der Abschirmplatten (2.1, 2.2, 2.3) eine Schallschluckmatte (6.1, 6.2, 6.3) angeordnet ist.

8. Einrichtung nach Anspruch 7, **dadurch gekennzeichnet, daß** die Schallschluckmatte (6.1, 6.2, 6.3) mit einem vorgegebenen Abstand zur Innenfläche der Abschirmplatte (2.1, 2.2, 2.3) angeordnet ist.

9. Einrichtung nach Anspruch 7 oder 8, **dadurch gekennzeichnet, daß** die Schallschluckmatte (6.1, 6.2, 6.3) im eingebauten Zustand sich zum Fahrzeuginnenraum hin öffnende, die Schallschluckmatte ganz oder teilweise durchdringende Öffnungen (7) aufweist.

10. Einrichtung nach einem der Ansprüche 7 bis 9, **dadurch gekennzeichnet, daß** die Schallschluckmatte (6.1, 6.2, 6.3) an der Dichtungsmanschette (5.1, 5.2, 5.3) gehaltert ist.

## Claims

1. A device for protecting the interior of a military vehicle, more particularly an armoured car, against heating from solar radiation, in which shielding plates (2.1, 2.2, 2.3) made of heat-insulating material can be arranged on the inside of at least one section of the outer wall (1) of the vehicle laterally adjoining one another in such a manner that an air gap (3.1, 3.2, 3.3) of predetermined width remains between the outwardly facing surface of the shielding plates (2.1, 2.2, 2.3) and the inner surface of the outer wall (1), the shielding plates (2.1, 2.2, 2.3) being made of a material simultaneously offering protection against shattering and being provided on their outwardly facing side with a layer (4.1, 4.2, 4.3) outwardly reflecting infrared radiation.

2. A device according to claim 1, **characterised in that** the layer (4.1, 4.2, 4.3) reflecting infrared radiation is constructed as film bonded to the shielding plates (2.1, 2.2, 2.3).

3. A device according to one of claims 1 or 2, **characterised in that**, in the fitted state, the air gap (3.1, 3.2, 3.3) between the outwardly facing surface of the shielding plates (2.1, 2.2, 2.3) and the inner surface of the outer wall (1) measures 10 to 20 mm, preferably 12 mm.

4. A device according to one of claims 1 to 3, **characterised in that** sealing sleeves (5.1, 5.2, 5.3), which in the fitted state are circumferential, act as spacing elements for the shielding plates (2.1, 2.2, 2.3), in which the shielding plates are held and which seal all around the respective space between the outwardly facing surface of the shielding plates (2.1, 2.2, 2.3) and the inner surface of the outer wall (1).

5. A device according to claim 4, **characterised in that** the sealing sleeves (5.1, 5.2, 5.3) of adjacently arranged shielding plates (2.1, 2.2, 2.3) rest directly against one another.

6. A device according to one of claims 1 to 5, **characterised in that** screw bolts (9) engaging in each case through openings in the shielding plate (2.1) are used for securing the shielding plates (2.1), the screw bolts being screwable into threaded elements (8) secured to the outer wall (1) of the vehicle, and it being possible to arrange isolating retaining elements (10) on the screw bolts in each case, which retaining elements engage in a retaining sleeve (5) arranged in the opening of the shielding plate (2.1).

7. A device according to one of claims 1 to 6, **characterised in that** a sound absorbing mat (6.1, 6.2, 6.3) is arranged in front of the inside of at least one section of the shielding plates (2.1, 2.2, 2.3).

8. A device according to claim 7, **characterised in that** the sound absorbing mat (6.1, 6.2, 6.3) is arranged at a predetermined distance from the inner surface of the shielding plate (2.1, 2.2, 2.3).

9. A device according to claim 7 or 8, **characterised in that**, in the fitted state, the sound absorbing mat (6.1, 6.2, 6.3) comprises openings (7), which open towards the vehicle interior and fully or partially penetrate the sound absorbing mat.

10. A device according to one of claims 7 to 9, **characterised in that** the sound absorbing mat (6.1, 6.2, 6.3) is secured to the sealing sleeve (5.1, 5.2, 5.3).

## Revendications

1. Dispositif pour protéger l'espace intérieur d'un véhicule de combat, en particulier d'un char de combat à l'encontre d'un échauffement sous le rayonnement solaire, dans lequel des plaques-écran (2.1, 2.2, 2.3) en matériau thermiquement isolant peuvent être agencées latéralement à la suite les unes des autres sur la face intérieure d'une partie au moins de la paroi extérieure (1) du véhicule, de telle sorte qu'un intervalle d'air (3.1, 3.2, 3.3) de largeur prédéterminée reste entre la surface dirigée vers l'extérieur des plaques-écran (2.1, 2.2, 2.3) et la surface intérieure de la paroi extérieure (1), les plaques-écran (2.1, 2.2, 2.3) étant constituées en un matériau assurant à la fois une protection anti-éclats et sont pourvues, sur leur face dirigée vers l'extérieur, d'une couche (4.1, 4.2, 4,3) réfléchissant le rayonnement infrarouge vers l'extérieur.

2. Dispositif selon la revendication 1, **caractérisé en ce que** la couche (4.1, 4.2, 4.3) réfléchissant le rayonnement infrarouge est réalisée sous la forme d'un film collé sur les plaques-écran (2.1, 2.2, 2.3).

3. Dispositif selon l'une ou l'autre des revendications 1 et 2, **caractérisé en ce que** dans l'état monté, l'intervalle d'air (3.1, 3.2, 3.3) entre la surface dirigée vers l'extérieur des plaques-écran (2.1, 2.2, 2.3) et la surface intérieure de la paroi extérieure (1) est de 10 à 20 mm, de préférence de 12 mm.

4. Dispositif selon l'une quelconque des revendications 1 à 3, **caractérisé en ce qu'**à titre d'éléments d'écartement pour les plaques-écran (2.1, 2.2, 2.3) servent, dans l'état monté, des manchettes d'étanchéité périphériques (5.1, 5.2, 5.3) dans lesquelles elles sont logées et qui étanchent sur tout le tour l'espace respectif entre la surface dirigée vers l'extérieur des plaques-écran (2.1, 2.2, 2.3) et la surface intérieure de la paroi extérieure (1).

5. Dispositif selon la revendication 4, **caractérisé en ce que** les manchettes d'étanchéité (5.1, 5.2, 5.3) des plaques-écran (2.1, 2.2, 2.3), agencées les unes à côté des autres, s'appuient directement les unes contre les autres.

6. Dispositif selon l'une quelconque des revendications 1 à 5, **caractérisé en ce qu'**à la fixation des plaques-écran (2.1) servent des boulons (9) traversant des ouvertures respectives dans la plaque-écran (2.1), qui peuvent venir se visser dans des éléments taraudés (8) fixés sur la paroi extérieure (1) du véhicule et sur lesquels peuvent être agencés des éléments de maintien isolants respectifs (10) qui s'engagent dans une manchette de maintien (5) agencée dans l'ouverture de la plaque-écran (2.1).

7. Dispositif selon l'une quelconque des revendications 1 à 6, **caractérisé en ce qu'**une nappe d'absorption de bruits (6.1, 6.2, 6.3) est agencée devant la face intérieure d'une partie au moins des plaques-écran (2.1, 2.2, 2.3).

8. Dispositif selon la revendication 7, **caractérisé en ce que** la nappe d'absorption de bruits (6.1, 6.2, 6.3) est agencée à une distance prédéterminée par rapport à la surface intérieure de la plaque-écran (2.1, 2.2, 2.3).

9. Dispositif selon l'une ou l'autre des revendications 7 et 8, **caractérisé en ce que** dans l'état monté, la nappe d'absorption de bruits (6.1, 6.2, 6.3) comprend des ouvertures (7) qui donnent sur l'espace intérieur du véhicule et qui traversent entièrement ou partiellement la nappe d'absorption de bruits.

10. Dispositif selon l'une quelconque des revendications 7 à 9, **caractérisé en ce que** la nappe d'absorption de bruits (6.1, 6.2, 6.3) est maintenue sur la manchette d'étanchéité (5.1, 5.2, 5.3).
